# EUROPÄISCHE PATENTSCHRIFT

(11) **EP 1 055 589 B1**
(45) Veröffentlichungstag und Bekanntmachung des Hinweises auf die Patenterteilung: **28.01.2004**
(21) Anmeldenummer: 00106178.7
(22) Anmeldetag: 21.03.2000
(51) Int. Cl.: B62D 35/00

(54) **Halterung für einen am Fahrerhausdach eines Lastkraftwagens angeordneten Dachspoiler**
Support for a roof spoiler on the driver's cab of a truck
Support pour un spoiler disposé sur le toit de la cabine conducteur d'un camion

(30) Priorität: 08.04.1999 AT 61799
(43) Veröffentlichungstag der Anmeldung: 29.11.2000
(73) Patentinhaber: MAN Steyr AG, 4400 Steyr (AT)
(72) Erfinder: Schönegger-Fösleitner, Erich (Ingenieur), 4400 Steyer (AT); Vogl, Markus (Ingenieur), 4400 Steyer-Gleink (AT)

(56) Entgegenhaltungen:
- DE-A- 19 825 252
- US-A- 4 026 595

## Beschreibung

Die Erfindung betrifft eine Halterung für einen am Fahrerhausdach eines Lastkraftwagens angeordneten Dachspoiler mit Merkmalen der im Oberbegriff des Anspruchs 1 angegebenen Art.

Eine ähnliche Dachspoiler-Halterung, aber für einen Dachspoiler auf einem Pkw-Dach, ist aus der US 4026595 A bekannt.

Dachspoiler auf dem Dach eines Lkw-Fahrerhauses haben die Aufgabe, die während der Fahrt auftretende Luftströmung hinter dem Fahrerhaus des Lastkraftwagen besser an die meist aerodynamisch ungünstigen, weil kubischen Aufbauten heranzuführen und damit den Gesamtluftwiderstand des Lastkraftwagens oder Lastzuges zu verringern, wodurch sich wiederum, abhängig von der Fahrgeschwindigkeit, eine nicht unbeträchtliche Reduzierung des Treibstoffverbrauches ergibt. Vor allem bei Sattelzugmaschinen, die mit Sattelaufliegern unterschiedlicher Höhen kombiniert werden, ist es sinnvoll, wenn der Dachspoiler an der Sattelzugmaschine höhenverstellbar ist und dadurch an die jeweilige Höhe des Aufliegers angepasst werden kann. Diese Dachspoiler sind in der Regel relativ großflächig und stabil ausgebildet, damit auch relativ schwergewichtig, um ihre volle Wirkung bei ausreichender Eigensteifigkeit entfalten zu können. Da in vielen Fällen das Fahrzeug nur mit einem Lenker besetzt ist, besteht die Forderung, die Halterung für den Dachspoiler so zu gestalten, dass dessen Höhenverstellung vom Fahrer alleine bewerkstelligt werden kann. Eine solche Einmannbedienung ist bei der eingangs genannten Vorrichtung kaum oder nur erschwert möglich, da dort je Stützstange eine Befestigungsschraube mit Werkzeugen gelöst und später nach Verstellung des Dachspoilers auch wieder angezogen werden muss.

Bei anderen bekannten Lösungen ist beispielsweise eine Stützvorrichtung vorgesehen, die aus zwei hydraulischen Druckzylindern besteht, die einenendes hinten am Dachspoiler um eine gemeinsame Horizontalquerachse schwenkbar sowie parallel zueinander nach unten abragend angeordnet und andernendes schwenkbar am Fahrerhaus in dortigen Lagerstellen gelagert sind. Diese Art von Verstelleinrichtung für den Dachspoiler ist vergleichsweise teuer, denn sie erfordert hinsichtlich der Bereitstellung des Drucköles für Halten und Verändern der Dachspoiler-Stellung eine vergleichsweise aufwendige und damit teure Steuerhydraulik.

Zur Abrundung der Diskussion des Standes der Technik sei auch noch auf eine aus der AT 385 734 B bekannte Dachspoiler-Halterung verwiesen. Dieser liegt im Gegensatz zur anmeldungsgemäßen Version ein Dachspoiler zugrunde, der sich zur etwa im vorderen Drittel des Fahrerhaus-Daches erstreckt. Die Halterung für diesen relativ kleinen Dachspoiler besteht aus zwei Stützstangen und zwei auf dem Dach angeordneten Führungskulissen mit jeweils einem Langloch, das den Dachspoiler-Verstellbereich vorgibt, und einer Exzentnerklemmvorrichtung.

Es ist demgegenüber daher Aufgabe der Erfindung, als Teil der Halterung für einen am Fahrerhausdach eines Lastkraftwagens angeordneten höhenverstellbaren Dachspoiler eine Stützvorrichtung zu schaffen, die eine Dachspoilerverstellung durch eine einzige Person ohne Zuhilfenahme von Werkzeugen ermöglicht, eine exakte Arretierung des Dachspoilers in eingestellter Position sicherstellt und ohne komplizierte sowie teure Verstellsysteme auskommt.

Diese Aufgabe ist bei einer Dachspoiler-Halterung der gattungsgemäßen Art erfindungsgemäß durch eine Stützvorrichtung mit den im Anspruch 1 gekennzeichneten Merkmalen gelöst. Vorteilhafte Ausgestaltungen und Weiterbildungen dieser Lösung sind in den Unteransprüchen gekennzeichnet.

Die Teile der erfindungsgemäßen Stützvorrichtung sind relativ einfach und billig herstellbar sowie leicht am Dachspoiler und Fahrzeug montierbar. Außerdem ermöglicht diese erfindungsgemäße Stützvorrichtung ihre Bedienung durch eine einzige Person für eine Verstellung bzw. Neueinstellung des Dachspoilers. Durch die formschlüssige Festlegung jeder Stützstange am zugehörigen Kulissenstein ist eine sichere Abstützung des Dachspoilers in jeder Einstellposition gewährleistet.

Nachstehend ist die erfindungsgemäße Lösung anhand mehrerer in der Zeichnung dargestellter Ausführungsbeispiele noch näher erläutert. In der Zeichnung zeigen:
- Fig. 1: den linksseitigen Teil eines ersten Ausführungsbeispiels der erfindungsgemäßen Stützvorrichtung in Ansicht von hinten,
- Fig. 2: das Ausführungsbeispiel gemäß Fig. 1 in Seitenansicht,
- Fig. 3: einen Schnitt durch das Ausführungsbeispiel gemäß Fig. 1 und 2 entlang der in Fig. 1 dargestellten Schnittlinie III-III,
- Fig. 4: das Ausführungsbeispiel gemäß Fig. 1 und 2 in Schnittdarstellung gemäß Fig. 3, aber mit aufgelöstem Klemmverband,
- Fig.5: ein zweites Ausführungsbeispiel der erfindungsgemäßen Stützvorrichtung im Schnitt,
- Fig.6: ein drittes Ausführungsbeispiel der erfindungsgemäßen Stützvorrichtung im Schnitt,
- Fig. 7: ein viertes Ausführungsbeispiel der erfindungsgemäßen Stützvorrichtung,
- Fig. 8: das Ausführungsbeispiel gemäß Fig. 7 mit aufgelöstem Klemmverband,
- Fig. 9: den linken Teil eines fünften Ausführungsbeispiels der erfindungsgemäßen Stützvorrichtung in Ansicht von hinten, und
- Fig. 10: das Ausführungsbeispiel gemäß Fig. 9 in Seitenansicht.

In den Figuren sind gleiche bzw. einander entsprechende Teile des besseren Verständnisses wegen mit gleichen Bezugszeichen angezogen.

In der Zeichnung sind mit 1 das Fahrerhaus eines Lastkraftwagen, mit 2 dessen Dach, mit 3 eine Seitenwand und mit 4 eine Rückwand desselben bezeichnet. Am Fahrerhaus-Dach 2 ist ein Dachspoiler 5 angeordnet. Dieser ist vorne in nicht dargestellter Weise in geeigneten Lagerstellen um eine Horizontalquerachse schwenkbar gelagert. Außerdem ist dieser Dachspoiler 5 mittels einer hinteren, sich zwischen ihm und dem Fahrerhaus 1 erstreckenden Stützvorrichtung 6 erfindungsgemäßer Bauart hinsichtlich seines Anstellwinkels in Bezug auf das Fahrerhaus-Dach 2 verstellbar und in verschiedenen Positionen arretierbar.

Generell besteht die erfindungsgemäße Stützvorrichtung 6 aus zwei gleichen, hinten am Dachspoiler 5 um eine gemeinsame Horizontalquerachse 7 schwenkbar sowie parallel zueinander nach unten abragend angeordneten Stützstangen 8 und zwei zugehörigen Klemmvorrichtungen 9. Jede Klemmvorrichtung 9 besteht dabei aus einem mittelbar oder unmittelbar am Fahrerhaus 1 beweglich gelagerten Kulissenstein 10 mit Anlagefläche 11 für mittelbare oder unmittelbare Abstützung der Stützstange 8 sowie einem mit seinem Gewindestift 12 durch ein Langloch 13 in der Stützstange 8 hindurch in den Kulissenstein 10 eingeschraubten Handrad/Handgriff 14, das bzw. der direkt oder über eine zwischengelegte Klemmplatte 15 für Arretierung der Stützstange 8 auf diese in Richtung kulissensteinseitiger Anlagefläche 11 einwirkt. Außerdem sind am Kulissenstein 10 und jeder nach Art einer Führungskulisse ausgebildeten Stützstange 8 Formschlussorgane 16, 17 für ein formschlüssiges ineinandergreifen vorgesehen. Dabei sind die Formschlussorgane 17 an den Stützstangen 8 mehrfach, vorzugsweise in gleichen Abständen, über die Länge des Verstellbereiches verteilt vorhanden. Dieser Verstellbereich ist durch Lage und Länge des Langloches 13 in den Stützstangen 8 vorgegeben und auf den gewünschten Verstellwinkeibereich des Dachspoilers 5 abgestellt.

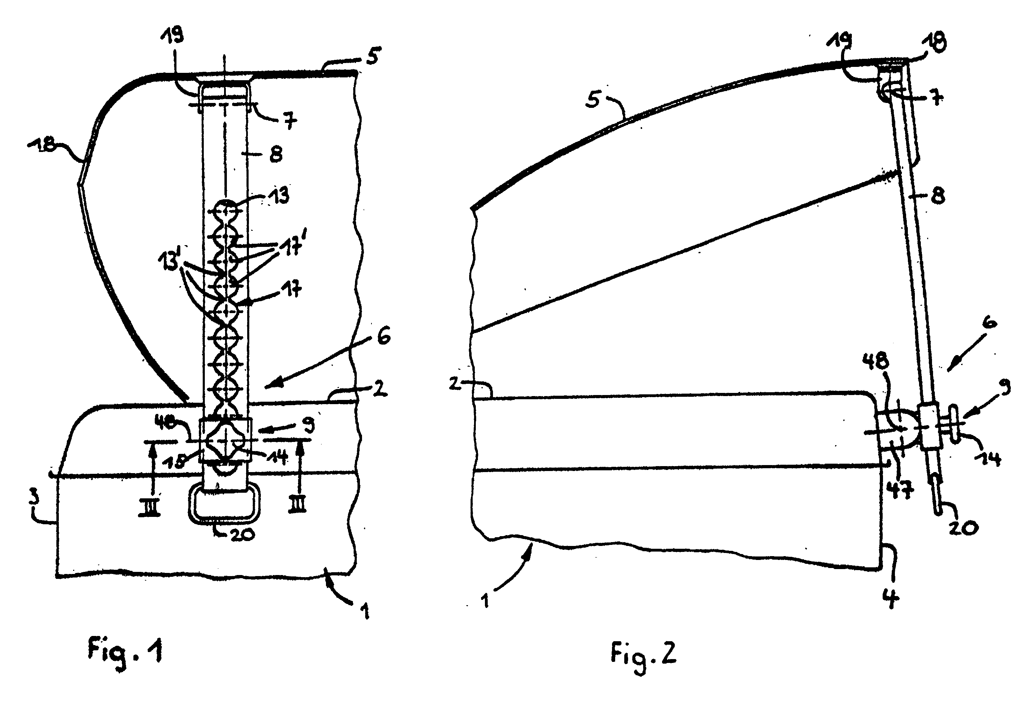

Die beiden Stützstangen 8 erstrecken sich im wesentlichen vertikal jeweils im seitlichen Außenbereich der Fahrerhaus-Rückwand 4 bzw. der Dachspoiler-Hinterkante 18 und sind obenendig jeweils an einem am Dachspoiler 5 im Bereich von dessen Hinterkante 18 angeordneten Lagerbock 19 z. B. mittels einer sich koaxial zur Horizontalquerachse 7 erstreckenden Lagerachse angelenkt. Die beiden Stützstangen 8 sind dabei höchstens soweit voneinander beabstandet, dass eine hinter der Fahrerhaus-Rückwand 4 auf dem Fahrgestell des Lastkraftwagens stehende Bedienungsperson in der Lage ist, ohne Positionswechsel mit beiden Händen gleichzeitig die Handräder/Handgriffe 14 beider Kulissensteine 10 für eine Dachspoiler-Verstellung zu betätigen. Das untere Ende der Stützstreben 8 kann mit einem Handgriff 20 ausgestattet sein (siehe Fig. 1 und 2), was der Bedienungsperson die Handhabung beim Dachspoiler-Verstellvorgang erleichtert. Bei besonders schweren Dachspoilem 5 oder Anwendungsfällen, die ein häufiges Verstellen des Dachspoilers 5 erfordern, kann für diesen auch eine Gewichtsentlastungseinrichtung z. B. in Form einer oder zweier sich zwischen ihm und Fahrerhaus 1 erstreckenden Gasfeder(n) vorgesehen sein.

Für die Einstellung des Dachspoilers 5 in einer gegenüber momentaner neuen Position ist zunächst die formschlüssige Verbindung zwischen jeder Stützstange 8 und zugehörigem Kulissenstein 10 aufzuheben, und zwar durch Lösen der Klemmung durch Aufdrehen des Handrades/Handgriffes 14. Das Formschlussorgan 16 am Kulissenstein 10 muss dabei vollständig aus dem Formschlussorgan 17 jeder Stützstange 8 austauchen. Anschließend ist der Dachspoiler 5 zu verstellen, was mit einer nun möglichen Verschiebung der Stützstangen 8 gegenüber den Kulissensteinen 10 einhergeht, solange, bis der Dachspoiler 5 in gewünschter neuer Position ist. Dann werden die dieser Stellung entsprechenden Formschlussorgane 17 in den Stützstangen 8 jeweils wieder mit dem kulissensteinseitigen Formschlussorgan 16 in Eingriff gebracht und gleichzeitig die Stützstangen 8 jeweils wieder am zugehörigen Kulissenstein 10 durch Anziehen des Handrades/Handgriffes 14 festgeklemmt. Durch diese formschlüssige Festlegung der jeweiligen Höheneinstellpositionen in definierten Stufen ist eine exakte, links wie rechts gleiche Einstellung der Stützstangen 8 möglich. Zur Erleichterung des Auffindens der beiderseits gleichen Einstellstufe können an beiden Stützstangen 8 die jeweiligen Formschlussorgane 17 zum Beispiel durch leicht lesbare Nummerierungen, farblich unterschiedliche Markierungen, Codierungen oder dergleichen gekennzeichnet werden.

Nachfolgend ist auf verschiedene unterschiedliche Einzelheiten der dargestellten Ausführungsbeispiele näher eingegangen.

Jede der beiden Stützstangen 8 ist durch eine in sich gerade Metallstange gebildet. In den dargestellten Beispielen hat diese einen U-förmigen Querschnitt und wird entweder durch Ablängen aus einer U-Profil-Halbzugstange oder durch Blech-Pressen hergestellt. Das Langloch 13 mit den Formschlussorganen 17 wird bei den dargestellten Ausführungsbeispielen in der sich zwischen den beiden zueinander parallelen Seitenwangen 21, 22 erstreckenden Querwand 23 durch Ausstanzen oder spanabhebende Bearbeitung hergestellt.

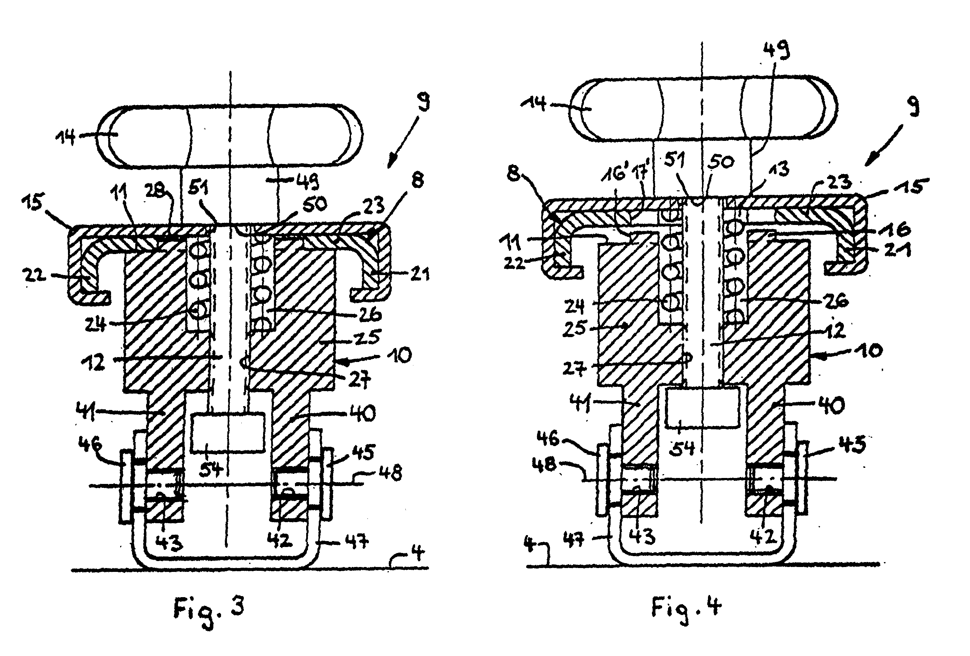

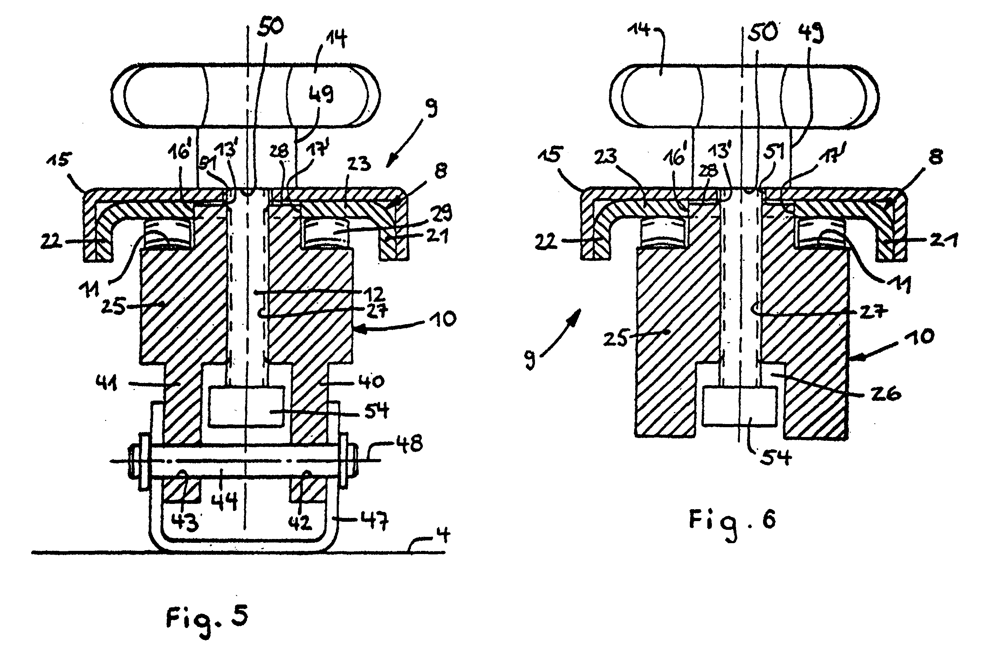

Generell sind die Formschlussorgane 17 in jeder Stützstange 8 im Bereich von deren Langloch 13 vorgesehen, erstrecken sich dementsprechend über dessen den Verstellbereich bestimmender Länge. Die Formschlussorgane 17 sind in den dargestellten Beispielen in Form von untereinander gleich weit beabstandeten, gleich großen Lagesicherungstöchern 17' realisiert. Zwischen diesen Lagesicherungslöchem 17' erstrecken sich längs einer Geraden als weitere Abschnitte des Langloches 13 Schlitze 13'. Deren Breite ist im Fall der Ausführungsbeispiele gemäß Fig. 5, 6 und 7, 8 etwas größer als der Durchmesser des Handrad/Handgriff-Gewindestiftes 12. Im Fall der Ausführungsbeispiele gemäß Fig. 1 bis 4 und 9, 10 ist koaxial zum Handrad-/Handgriff-Gewindestift eine Druckfeder 24 angeordnet, die sich innenseitig an der Klemmplatte 15 abstützt. Um eine Längsverschiebung der Stützstange 8 zu ermöglichen, müssen daher in diesem Fall die Schlitze 13' eine Breite haben, die größer als der Durchmesser der Druckfeder 24 ist.

An die Form und Größe dieser Lagesicherungslöcher 17' ist das Formschlussorgan 16 am Kulissenstein 10 in Form eines dortigen stirnbereichsseitigen Ansatzes 16' mit entsprechender Außenkontur für formschlüssiges Eintauchen angepasst.

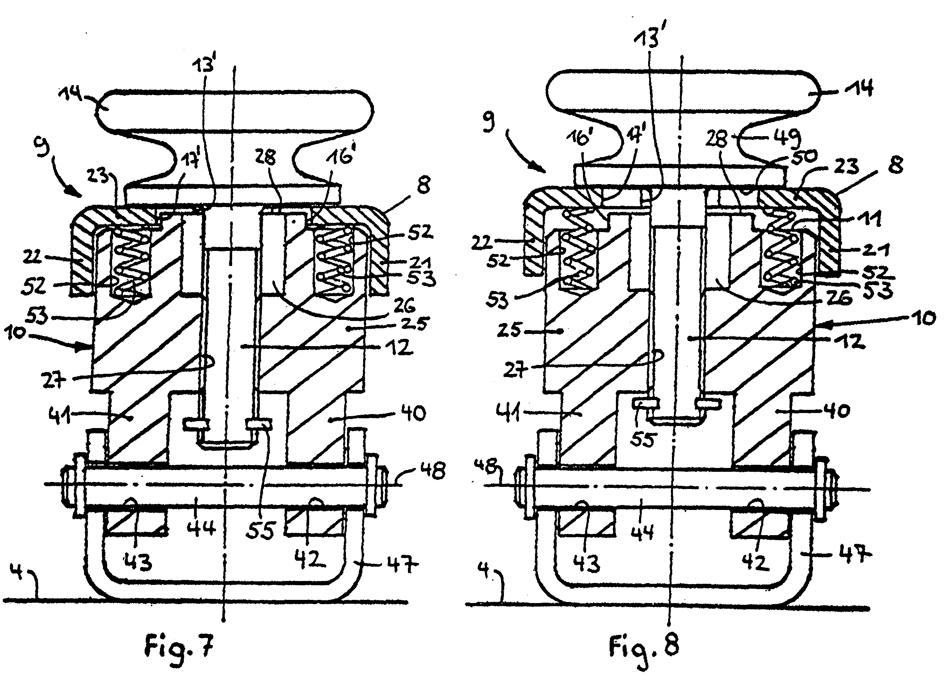

Der Kulissenstein 10 ist generell aus Metall oder Kunststoff und vorzugsweise durch ein Gussteil realisiert. Bei den gezeigten Ausführungsbeispielen besitzt der Kulissenstein 10 einen zylindrischen Grundkörper 25 mit runder oder rechteckiger Außenform, in dem eine zentrale, koaxial verlaufende Durchgangsbohrung 26 mit einem Gewindeabschnitt 27 zur Hindurchführung und Einschraubung des Handrad-/Handgriff-Gewindestiftes 12 dient. Dabei kann der Grundkörper 25 auch so gestaltet und bemessen sein (siehe Fig. 7, 8), dass er in der Stützstange 8 zwischen deren Seitenwangen 21, 22 horizontal quergeführt ist. Außerdem ist an diesem Grundkörper 25 stirnbereichsseitig der das Formschlussorgan 16 bildende Ansatz 16' angeordnet, der vorne eine ebene Stirnfläche 28 aufweist. Axial zurückgesetzt in Bezug auf diese vordere Stirnfläche 28 ist am inneren Ende des Ansatzes 16' die ringförmige Anlagefläche 11 gegeben, auf der die Stützstange 8 entweder unmittelbar aufliegend (siehe Beispiel gemäß Fig. 1 bis 4 und 7, 8) festklemmbar oder ein Tellerfederpaket 29 (siehe Beispiel gemäß Fig. 5, 6) abstützbar ist, auf dem die Stützstange 8 abgestützt und damit mittelbar am Kulissenstein 10 festklemmbar ist.

Unabhängig von seiner sonstigen Ausgestaltung weist jeder Kulissenstein 10 in dem Fall, wenn er unmittelbar am Fahrerhaus 1 gelagert ist (siehe Fig. 1 bis 4, 5, 7, 8), auf seiner dem Handrad/Handgriff 14 gegenüberliegenden Seite zwei abragend angeordnete Befestigungswangen 40, 41 mit zueinander fluchtenden Querbohrungen 42, 43 auf, über die er mittels einer durchgehenden Lagerachse 44 oder zweier Lagerschrauben 45, 46 an einem fahrerhausfest angeordneten Lagerbock 47 um eine Horizontalquerachse 48 schwenkbar angelenkt ist.

Die Klemmplatte 15 kann auf verschiedene Art und Weise realisiert sein. Im Fall des Ausführungsbeispieles gemäß Fig. 7, 8 ist die Klemmplatte 15 Bestandteil des Handrades/Handgriffes 14 und an diesem nach Art eines Drucktellers entweder fest oder frei drehbar gelagert angeordnet. In diesem Fall stützt sich das/der Handrad/Handgriff 14 über die drucktellerartige Klemmplatte 15 außen an der Querwand 23 der Stützstange 8, diese größtenteils überdeckend, ab.

Wie aus den Beispielen gemäß Fig. 5 und 6 ersichtlich, kann die Klemmplatte 15 auch so ausgebildet sein, dass sie die Stützstange 8 außen zumindest partiell formschlüssig mit solchem Spiel übergreift, dass sie bei aufgelöster Klemmung nach Art eines Schlittens längs der Stützstange 8 geführt gleitend verschiebbar ist. In diesem Fall übergreift die Klemmplatte 15 die im Querschnitt U-förmige Stützstange 8, die Querwand 23 sowie die Seitenwangen 21 und 22 überdeckend nach Art einer abhebenden Kappe. Bei der Ausführungsform gemäß Fig. 1 bis 4 ist gegenüber jener von Fig. 5 und 6 lediglich unterschiedlich, dass die Klemmplatte 15 die Stützstange 8 formschlüssig noch weiter umgreift, nämlich auch hintergreift und somit an der Stützstange 8 unverlierbar angeordnet ist. Solche Klemmplatten 15 verhindern eine Verformung der Stützstange 8 beim Festziehen des Handrades/Handgriffes 14. In diesen Fällen ist am Handrad/Handgriff 14 lediglich ein Hals 49 mit einer stirnseitigen Druckfläche 50 vorgesehen, an der eine solche Klemmplatte 15 abgestützt ist. Außerdem ist in solchen Klemmplatten 15 eine Durchgangsbohrung 51 für Hindurchführung des Gewindestiftes 12 vorhanden. Es besteht in diesen Fällen die Möglichkeit, die Stützstange 8 entweder direkt auf der Anlagefläche 11 oder indirekt über das auf der Anlagefläche 21 aufliegende Tellerfederpaket 29 abgestützt am Kulissenstein 10 festzuklemmen.
Bei Zwischenschaltung des Tellerfederpaketes 29 wird die Klemmplatte 15 an der vorderen Stirnfläche 28 des Kulissensteins 10 festgespannt.

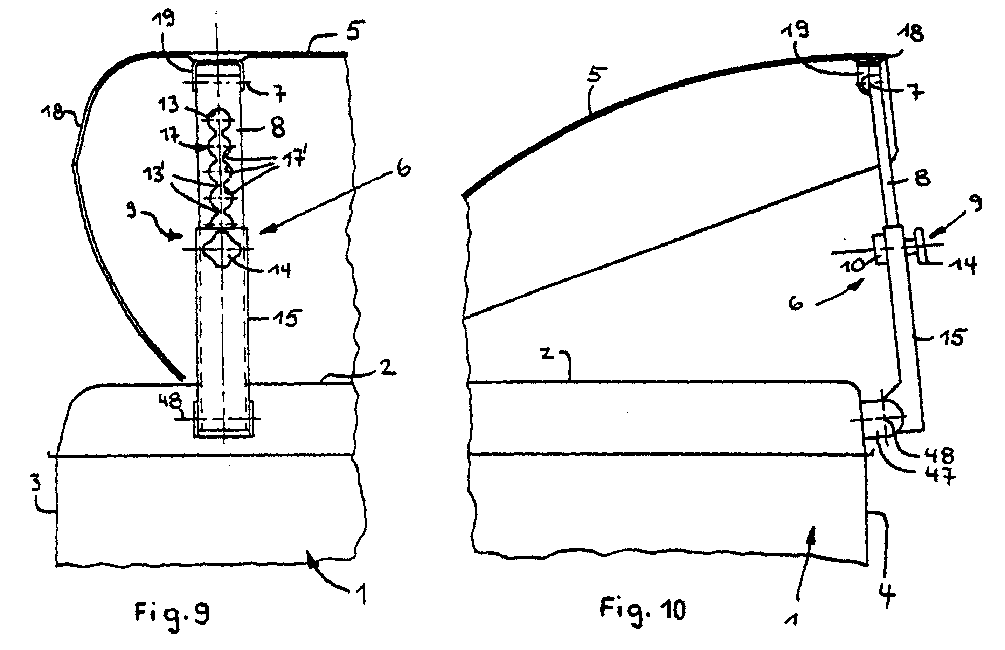

Das Ausführungsbeispiel gemäß Fig. 9 und 10, bei dem beispielsweise auch ein Kulissenstein 10 gemäß Fig. 6 verwendet werden kann, unterscheidet sich von den anderen Beispielen dadurch, dass der Kulissenstein 10 hier nicht unmittelbar, sondern mittelbar am Fahrerhaus 1 beweglich angeordnet ist. Dabei ist in diesem Fall als Halterung für den bei dieser Anwendung quasi nur als Mutter für den Handrad-/ Handgriff-Gewindestift 12 fungierenden Kulissenstein 10 eine entsprechend gestaltete Klemmplatte 15 vorgesehen. Diese ist als vergleichsweise langer Führungsschlitten für die Stützstange 8 ausgebildet und an ihrem unteren Ende vorzugsweise in gleicher Art wie der Kulissenstein 10 der Ausführungsbeispiele gemäß Fig. 1 bis 4, 5, 7, 8, also im fahrerhausfesten Lagerbock 47 mittels der querdurchgehenden Lagerachse 44 oder Lagerschrauben 45, 46 um die Horizontalquerachse 48 schwenkbar gelagert.

Die Druckfeder 24 oder das Tellerfederpaket 29 oder am Kulissenstein 10 in Sacklochbohrungen 52 gefasste federelastische Elemente 53, z. B. Spiralfedern oder Gummipuffer dienen dazu, den ständigen Anlagekontakt zwischen Stützstange 8 und Klemmplatte 15 sowie dieser und dem Handrad/Handgriff 14 sicherzustellen. Letzteres erweist sich besonders hilfreich bei einem Dachspoiler-Verstellvorgang, weil diese Federorgane 24 bzw. 29 bzw. 53 nach Lösen der Klemmung durch Aufdrehen des Handrades/Handgriffes 14 die Stützstange 8 und Klemmplatte 15 gemeinsam vom Kulissenstein 10 abheben und so automatisch die Formschlussorgane 16, 17 außer Eingriff bringen.

Um zu vermeiden, dass der Handrad-/Handgriff-Gewindestift 12 bei einem solchen Lösevorgang zu weit oder gar ganz aus dem Kulissenstein 10 herausgedreht wird, weist er an seinem äußeren freien Ende einen Bund 54 oder Sicherungsring 55 auf.

## Patentansprüche

1. Halterung für einen am Fahrerhausdach eines Lastkraftwagens angeordneten Dachspoiler, der vorne um eine Horizontalquerachse schwenkbar sowie mittels einer hinteren, sich zwischen ihm und dem Fahrerhaus erstreckenden Stützvorrichtung hinsichtlich seines Anstellwinkels verstellbar und in bestimmter Stellung arretierbar ist, die aus zwei gleichen, hinten am Dachspoiler um eine gemeinsame Horizontalquerachse schwenkbar sowie parallel zueinander nach unten abragend angeordneten Stützstangen und zwei zugehörigen Klemmvorrichtungen besteht, wobei jede Klemmvorrichtung eine am Fahrerhaus abgestützte Halterung aufweist, ferner an jeder Halterung und jeder nach Art einer Führungskulisse ausgebildeten Stützstange Formschlussorgane für ein formschlüssiges Ineinandergreifen vorgesehen und die Formschlussorgane an den Stützstangen mehrfach über die Länge des Verstellbereiches verteilt vorhanden sind, und wobei jede Stützstange ein den Verstellbereich des Dachspoilers vorgebendes Langloch aufweist sowie mittels einer mit ihrem Gewindestift das Langloch durchdringenden und in die Halterung eingeschraubten lösbaren Schraubverbindung an einer Anlagefläche der Halterung festspannbar ist, **dadurch gekennzeichnet, dass** jede Klemmvorrichtung (9) als Halterung einen mittelbar oder unmittelbar beweglich am Fahrerhaus (1) gelagerten Kulissenstein (10) mit einer Anlagefläche (11) aufweist, an der die Stützstange (8) unmittelbar oder mittelbar abstützbar ist, dass ferner als Teil jeder Klemmvorrichtung (9) ein Handrad/Handgriff (14) vorgesehen ist, das/der direkt oder über eine Klemmplatte (15) für Arretieren der Stützstange (8) auf diese in Richtung kulissenseitiger Anlagefläche (11) einwirkt und mit seinem Gewindestift (12) durch das Langloch (13) in der Stützstange (8) hindurch in den Kulissenstein (10) eingeschraubt ist, und dass die Formschlussorgane (17) in jeder Stützstange (8) im Bereich von deren Langloch (13) vorgesehen sind.

2. Halterung nach Anspruch 1, **dadurch gekennzeichnet, dass** die Stützstangen (8) sich im wesentlichen vertikal jeweils im seitlichen Außenbereich der Fahrerhaus-Rückwand (4) bzw. Dachspoiler-Hinterkante (18) erstrecken, obenendig jeweils an einem am Dachspoiler (5) im Bereich von dessen Hinterkante (18) angeordneten Lagerbock (19) angelenkt und höchstens soweit voneinander beabstandet sind, dass eine hinter der Fahrerhaus-Rückwand am Fahrgestell des Lastkraftwagens stehende Bedienungsperson in der Lage ist, ohne Positionswechsels mit beiden Händen gleichzeitig die Handräder/Handgriffe (14) beider Kulissensteine (10) für eine Dachspoiler-Verstellung zu betätigen.

3. Halterung nach Anspruch 1, **dadurch gekennzeichnet, dass** für Einstellung des Dachspoilers (5) in einer gegenüber momentaner neuen Position zunächst die formschlüssige Verbindung zwischen jeder Stützstange (8) und zugehörigem Kulissenstein (10) durch Lösen der Klemmung mittels des Handrades/Handgriffes (14) aufhebbar ist, anschließend der Dachspoiler (5) und damit einhergehend die Stützstangen (8) gegenüber den Kulissensteinen (10) verstellbar und jeweils mit einem anderen Formschlussorgan (17) als vorher wieder mit dem kulissenseitigen Formschlussorgan (16) in Eingriff bringbar sind sowie zuletzt die Stützstange (8) am zugehörigen Kulissenstein (10) durch Anziehen des Handrades/Handgriffes (14) wieder festklemmbar ist.

4. Halterung nach einem der Ansprüche 1 bis 3, **dadurch gekennzeichnet, dass** die in jeder Stützstange (8) im Bereich von deren Langloch (13) vorgesehenen Formschlussorgane (17) aus sich über die Länge des Versteltbereiches erstreckend voneinander beabstandeten, gleichgroßen, an die Form und Größe eines kulissensteinseitig das Formschlussorgan (16) bildenden Lagesicherungsansatzes (16') für dessen formschlüssiges Eintauchen angepassten Lagesicherungslöchern (17') bestehen, die untereinander durch sich entlang einer Geraden erstreckende Schlitze (13') verbunden sind, deren Breite so bemessen ist, dass der Handrad-/Handgriff-Gewindestift (12), gegebenenfalls auch eine diesen umgebende Druckfeder (24), nach Lösen der Klemmung mittels des Handrades/Handgriffes (14) und nach vollständigem Austauchen des Lagesicherungsansatzes (16') aus einem Lagesicherungsloch (17') bei Verstellung des Dachspoilers (5) und damit einhergehender Verschiebung der Stützstange (8) in den Bereich eines nachfolgenden Lagesicherungsloches (17') in letzterer kommen kann.

5. Halterung nach einem der vorhandenen Ansprüche, **dadurch gekennzeichnet, dass** jede Stützstange (8) aus einer geraden Metallstange mit U-förmigem Querschnitt besteht, die entweder durch Ablängen aus einer U-Profil-Halbzeugstange oder durch Blech-Pressen hergestellt ist und in der die Formschlussorgane (17, 17') in der sich zwischen den beiden zueinander parallelen Seitenwangen (21, 22) erstreckenden Querwand (23) ausgebildet sind.

6. Halterung nach Anspruch 4, **dadurch gekennzeichnet, dass** der Kulissenstein (10) aus Metall oder Kunststoff vorzugsweise durch einen Gussteil realisiert ist und einen Grundkörper (25) aufweist, mit folgenden Teilmerkmalen, nämlich
- einer zentralen Durchgangsbohrung (26) mit zumindest abschnittsweisem Gewinde (27) für Hindurchführung sowie Einschraubung des Handrad-/Handgriff-Gewindestiftes (12),
- einem an ihm stirnbereichsseitig angeformten, das Formschlussorgan (16) bildenden Lagesicherungsansatz (16') mit vorderer Stirnfläche (28), und
- einer an ihm axial in Bezug auf die vordere Stimfläche (28) am Lagesicherungsansatz (16') zurückgesetzten und an dessen innerem Ende durch eine ebene Ringfläche gebildeten Anlagefläche (11), auf der die Stützstange (8) entweder unmittelbar aufliegend festklemmbar oder ein Tellerfederpaket (29) abstützbar ist, auf dem die Stützstange (8) festklemmbar ist.

7. Halterung nach den Ansprüchen 5 und 6, **dadurch gekennzeichnet, dass** der Grundkörper (25) des Kulissensteins (10) eine solche Außenform und Größe hat, dass er in der Stützstange (8) horizontal quergeführt ist.

8. Halterung nach einem der Ansprüche 6 und 7, **dadurch gekennzeichnet, dass** in dem Fall, wenn der Kulissenstein (10) unmittelbar am Fahrerhaus (1) gelagert ist, dieser auf seiner dem Handrad/Handgriff (14) gegenüberliegenden Seite zwei am Grundkörper (25) abragend angeordnete Befestigungswangen (40, 41) mit zueinander fluchtenden Querbohrungen (42, 43) aufweist, über die mittels einer Lagerachse (44) oder zweier Lagerschrauben (45, 46) der Kulissenstein (10) an einem fahrerhausfest angeordneten Lagerbock (47) um eine Horizontalquerachse (48) schwenkbar angelenkt ist.

9. Halterung nach einem der Ansprüche 1 bis 8, **dadurch gekennzeichnet, dass** dann, wenn eine Klemmplatte (15) vorgesehen ist, diese Bestandteil des Handrades/Handgriffes (14) und an diesem nach Art eines Drucktellers entweder fest oder frei drehbar gelagert angeordnet ist.

10. Halterung nach einem oder mehreren der Ansprüche 1 bis 8, **dadurch gekennzeichnet, dass** dann, wenn eine Klemmplatte (15) vorgesehen ist, diese die Stützstange (8) außen zumindest partiell formschlüssig mit solchem Spiel übergreift, dass sie bei gelöster Klemmung nach Art eines Schlittens längs der Stützstange (8) geführt gleitend verschiebbar ist, und dass dieser Klemmplatte (15) ein Handrad/Handgriff (14) mit einem Hals (49) mit stirnseitiger Druckfläche (50) zugeordnet ist, an der die Klemmplatte (15) abgestützt ist.

11. Halterung nach Anspruch 10, **dadurch gekennzeichnet, dass** die Klemmplatte (15) die Stützstange (8) nur soweit außen formschlüssig umgreift, dass sie von ihr abhebbar wäre, dass diese Klemmplatte (15) ein Durchgangsloch (51) solcher Größe aufweist und das Langloch (13) bzw. die Langlochschlitze (13') in der Stützstange (8) eine solche Breite haben, dass der Handrad-/Handgriff-Gewindestift (12) gerade hindurchpasst, und dass in diesem Fall die Klemmung durch die an der Stimfläche (28) am Kulissenstein (10) zur Anlage gebrachte Klemmplatte (15) und über ein Tellerfederpaket (29) erfolgt, das sich einerseits an der kulissensteinseitigen Anlagefläche (11) sowie andererseits innen an der Stützstange (8) abstützt, letztere solchermaßen an die Klemmplatte (15) und diese wiederum an die Druckfläche (50) am Hals (49) des Handrades/Handgriffes (14) andrückt.

12. Halterung nach Anspruch 10, **dadurch gekennzeichnet, dass** die Klemmplatte (15) die Stützstange (8) außen so weit formschlüssig umgreift, dass sie an letzterer unverlierbar ist und immer in Gleitkontakt bleibt, dass diese Klemmplatte (15) ein Durchgangsloch (51) solcher Größe aufweist, dass der Handrad-/Handgriff-Gewindestift (12) gerade hindurchpasst, dass die zentrale Durchgangsbohrung (26) im Kulissenstein (10) einen gegenüber dem Gewindeabschnitt (27) durchmessergrößeren Abschnitt aufweist, in dem eine koaxial den Handrad-/Handgriff-Gewindestift (12) umgebende Druckfeder (24) aufgenommen ist, die andernendes an der Innenseite der Klemmplatte (8) abgestützt ist, wodurch bei Lösen der Klemmung unter Entspannung der Druckfeder (24) die Klemmplatte (15) gemeinsam mit der Stützstange (8) vom Kulissenstein (10) abhebbar ist, und dass in diesem Fall die Breite des Langloches (13) bzw. der Langlochschlitze (13') in der Stützstange (8) geringfügig größer als der Durchmesser der Druckfeder (24) ist.

13. Halterung nach einem der Ansprüche 1 bis 12, **dadurch gekennzeichnet, dass** mittels federelastischer Elemente, z. B. ein auf der ringförmigen Anlagefläche (11) am Kulissenstein (10) abgestütztes Tellerfederpaket (29) oder am Kulissenstein (10) in Sacklochbohrungen (52) gefasste federelastische Elemente (53) wie Spiralfedern oder Gummipuffer, die sich andemendes innenseitig an der Stützstange (8) abstützen, der ständige Anlagekontakt zwischen Stützstange (8), Klemmplatte (15) und Handrad/Handgriff (14) hergestellt ist.

14. Halterung nach einem der Ansprüche 6 und 7, **dadurch gekennzeichnet, dass** die Klemmplatte (15) als Halterung für den Kulissenstein (10) nach Art eines vergleichsweise langen Führungsschlittens ausgebildet ist, außerdem an ihrem unteren Ende an einem fahrerhausfesten Lagerbock (47) mittels einer querdurchgehenden Lagerachse (44) oder zwei Lagerschrauben (45, 46) um eine Horizontalquerachse (48) schwenkbar gelagert ist und in diesem Fall das Mittel bildet, über das der Kulissenstein (10) beweglich in Bezug auf das Fahrerhaus (1) angeordnet ist.

15. Halterung nach einem der Ansprüche 1 bis 14, **dadurch gekennzeichnet, dass** der Handrad-/Handgriff-Gewindestift (12) am Kulissenstein (10) gegen zu weites oder vollständiges Herausdrehen durch einen an seinem freien Ende angeordneten Bund (54) oder Sicherungsring (55) gesichert ist.

## Claims

1. Bracket for a roof spoiler which is fitted to the cab roof of a truck, can be slewed at the front about a horizontal transverse axis, adjusted with regard to its lateral inclination angle and locked into place in a certain position by means of a rear-mounted support device extending between said roof spoiler and the cab and composed of two identical supporting bars which can, at the rear end of the roof spoiler, be slewed about a common horizontal transverse axis, are arranged parallel to each other and point downwards and of two associated clamps, each of which is provided with a bracket supported on the cab, that, in addition, positive-connection organs for positive interconnection are provided on each of the brackets and on each of the supporting bars designed as sliding-block guides and the positive-connection organs are provided on the supporting bars at several points distributed over the length of the adjusting area, whereby each supporting bar shows a longitudinal slot specifying the adjusting range for the roof spoiler and can be clamped to the contact face on the bracket by means of a detachable bolted connection which with its threaded pin passes through the longitudinal slot and is bolted into the bracket, **characterised in that** for fastening purposes each clamping device (9) has a sliding block (10) supported on the cab (1) in a directly or indirectly movable manner and provided with a contact face (11) on which the supporting bar (8) can be supported directly or indirectly, that, in addition, a hand wheel/handle (14) is provided as part of each clamping device (9), which hand wheel/handle (14) acts, directly or via a clamping plate (15) for locking the supporting bar (8), on said supporting bar (8) in the direction of the contact face (11) facing the sliding block and is screwed into the sliding block (10), its threaded pin (12) passing through the longitudinal slot (13) in the supporting bar (8), and that the positive-connection organs (17) are provided in each supporting bar (8) in the area of its longitudinal slot (13).

2. Bracket according to Claim 1, **characterised in that** the supporting bars (8) are arranged in the lateral outer areas of the cab rear wall (4) and the roof-spoiler rear edge (18) and extend essentially in vertial direction, are, at their upper ends, located on a bearing block (19) arranged in the area of the rear edge (18) of the roof spoiler (5) and are, at most, spaced at such a distance relative to each other that a person standing on the truck chassis behind the cab rear wall can operate the hand wheels/handles (14) for both sliding blocks (10) for roof spoiler adjustment without having to change his position and with both hands simultaneously.

3. Bracket according to Claim 1, **characterised in that** for bringing the roof spoiler (5) into a position other than its current position the positive connection between each supporting bar (8) and the associated sliding block (10) can first be cancelled by loosening the clamping with the aid of the hand wheel/handle (14), afterwards the roof spoiler (5) and also the supporting bars (8) can be readjusted relative to the sliding blocks (10) and each supporting bar (8) can again be brought into engagement with the positive-connection organ (16) on the sliding block by means of a positive-connection organ (17) other than the one previously used and, finally, the supporting bar (8) can again be tightly clamped to the associated sliding block (10) by tightening the hand wheel/handle (14).

4. Bracket according to one of the Claims 1 to 3, **characterised in that** the positive-connection organs (17) provided in each supporting bar (8) in the area of its longitudinal slot (13) is composed of position securing holes (17') extending over the length of the adjusting range, being spaced some distance apart, being of identical size and adapted to the shape and size of a position securing device (16') which on the side facing the sliding block forms the positive connection organ (16) for the positive engagement of said organ (16) and being interconnected by slits (13') extending along a straight line and being of such a width that, after the clamping has been released by means of the hand wheel/handle (14) and after the position securing device (16') has completely emerged from the position securing hole (17'), for readjusting the roof spoiler (5) and, in conjunction with this, for shifting the supporting bar (8) to the area of the next position securing hole (17') the threaded pin (12) on the hand wheel/handle and, if fitted, a compression spring (24) encompassing said pin (12) can be moved into said next position securing holes (17').

5. Bracket according to one of the foregoing Claims, **characterised in that** each supporting bar (8) consists of a straight metal bar with U-shaped cross-section, which straight metal bar is manufactured either by cutting from a U-section semifinished rod or by metal-sheet pressing and in which the positive connection organs (17, 17') are provided in the transverse wall (23) extending between the two lateral cheeks (21, 22) running parallel to each other.

6. Bracket according to Claim 4, **characterised in that** the sliding block (10) is made of metal or synthetic material, preferably in the form of a cast part, and provided with a base body (25) with the following characteristic features, namely
• a central passage bore (26) which at least in some areas has a threaded portion (27) for passing through and screwing in the threaded pin (12) on the hand wheel/handle,
• a position securing device (16') which has a front end face (28), serves as the positive-connection organ (16) and forms an integral part of the front face of said base body (25) and
• a contact face (11) which in relation to the front end face (28) on the position securing device (16') is axially set back and forms a smooth annular face at the inner end of said base body (25), on which contact face (11) either the supporting bar (8) is supported directly and can be clamped into place or a cup spring pack (29) can be supported, on which cup spring pack (29) the supporting bar (8) can be clamped into place.

7. Bracket according to the Claims 5 and 6, **characterised in that** the base body (25) of the sliding block (10) has such an outer shape and size that it is guided in transverse direction in the supporting bar (8).

8. Bracket according to one of the Claims 6 and 7, **characterised in that** if the sliding block (10) is fitted directly to the cab (1) it has, on the side facing the hand wheel/handle (14), two mounting cheeks (40, 41) attached to the base body (25), pointing downwards from it and provided with transverse bores (42, 43) which are aligned with each other and via which the sliding block (10) is located on a cab-mounted bearing block (47) and can be slewed about a horizontal transverse axis (48) by means of a bearing shaft (44) or two bearing bolts (45, 46).

9. Bracket according to one of the Claims 1 to 8, **characterised in that** if a clamping plate (15) is provided, it is part of the hand wheel/handle (14) and attached to it like a pressing plate and mounted either rigidly or so that it can freely rotate.

10. Bracket according to one or several of the Claims 1 to 8, **characterised in that** if a clamping plate (15) is provided it encompasses the outside of the supporting bar (8) in an at least partially positive connection and with such a play that when the clamping is released it can be moved along the supporting bar (8) in a sliding manner like a slide and that a hand wheel/handle (14) with a neck (49) with a front-mounted pressure face (50) is allocated to this clamping plate (15) on which the clamping plate (15) is supported.

11. Bracket according to Claim 10, **characterised in that** the clamping plate (15) encompasses the outside of the supporting plate (8) in a positive connection only to such an extent that it could be lifted away from it, that this clamping plate (15) has a passage bore (51) of such size and the longitudinal slit (13) and the longitudinal slits (13') in the supporting bar (8) have such a width that the threaded pin (12) on the hand wheel/handle can only just pass through them and that in this case the clamping is effected by means of the clamping plate (15) contacting the front face (28) on the sliding block (10) and via a cup spring pack (29) which, on the one hand, is supported on the contact face (11) facing the sliding block (10) and, on the other, on the inside of the supporting bar (8) and thus presses said supporting bar (8) against the clamping plate (15) and this in turn against the pressure face (50) on the neck (49) of the hand wheel/handle (14).

12. Bracket according to Claim 10, **characterised in that** the clamping plate (15) encompasses the outside of the supporting plate (8) in a positive connection to such an extent that it cannot be detached from said supporting plate (8) and always remains in sliding contact, that this clamping plate (15) has a passage bore (51) of such size that the threaded pin (12) for the hand wheel/handle only just passes through it, that the central passage bore (26) in the sliding block (10) has a section whose diameter is larger than that of the threaded portion (27) and which houses a compression spring (24) coaxially encompassing the threaded pin (12) on the hand wheel/handle, the other end of which compression spring (24) is supported on the inside of the clamping plate (8), whereby when the clamping is loosened as the compression spring (24) is released the clamping plate (15), together with the supporting bar (8), can be lifted away from the sliding block (10) and that in this case the width of the longitudinal slot (13) and of the longitudinal slits (13') in the supporting bar (8) are slightly larger than the diameter of the compression spring (24).

13. Bracket according to the Claims 1 to 12, **characterised in that** constant contact between the supporting bar (8), the clamping plate (15) and the hand wheel/handle (14) is established by means of elastic elements, eg a cup spring pack (29) supported on the annular contact face (11) on the sliding block (10) or elastic elements (53), eg spiral springs or rubber buffers, which elastic elements (53) are held in blind bores (52) on the sliding block (10) and are, with their other end, supported on the inside of the supporting bar (8).

14. Bracket according to the Claims 6 and 7, **characterised in that** the clamping plate (15) is designed as a bracket for the sliding block (10) in the form of a comparatively long guide slide, that, in addition, it is with its lower end supported on a cab-mounted bearing block (47) by means of a transverse bearing shaft (44) or two bearing bolts (45, 46) and can be slewed about a horizontal transverse axis (48) and in this case constitutes the means via which the sliding block (10) is arranged slewably in relation to the cab (1).

15. Bracket according to one of the Claims 1 to 14, **characterised in that** on the sliding block (10) the threaded pin (10) on the hand wheel/handle is secured against being turned out either too far or completely by means of a collar (54) provided on its free end or by means of a circlip (55).

## Revendications

1. Support d'un déflecteur de pavillon disposé sur le pavillon de cabine d'un camion poids lourd, ce déflecteur étant pivotable sur le devant autour d'un axe transversal horizontal ainsi que réglable à l'aide d'un dispositif de support arrière s'étendant entre lui et la cabine et réglable au niveau de son angle d'attaque et verrouillable dans une certaine position, qui se compose de deux barres supports identiques pivotables autour d'un axe transversal horizontal commun à l'arrière sur le déflecteur de pavillon ainsi que disposées parallèlement l'une par rapport à l'autre et dépassant vers le bas et de deux dispositifs de verrouillage sur les barres supports, auquel cas chaque dispositif de verrouillage présente un support appuyé contre la cabine, de plus sont prévus sur chaque support et sur chaque barre support formée comme une coulisse de guidage des dispositifs de blocage pour permettre un engrènement de blocage et ces dispositifs de blocage sont présents à plusieurs endroits sur la longueur de la plage de réglage, et auquel cas chaque barre support présente un trou oblong spécifiant la plage de réglage du déflecteur de pavillon et peut être serrée sur une surface d'appui du support à l'aide d'une liaison vissée traversant le trou oblong au moyen de sa tige filetée et desserrable du support, **caractérisé par le fait que** chaque dispositif de verrouillage (9) présente en tant que support un coulisseau (10) placé directement ou indirectement de manière mobile sur la cabine (1) avec une surface d'appui sur laquelle peut s'appuyer directement ou indirectement la barre support (8) de telle manière qu'en outre soit prévu en tant que partie du dispositif de verrouillage (9) un volant/une mollette de réglage (14) qui agit directement ou par l'intermédiaire d'une plaque de verrouillage (15) sur le blocage de la barre support (8) sur cette surface d'appui (11) dans le sens du côté de la coulisse et est vissé(e) avec sa tige filetée à travers le trou oblong (13) dans la barre support (8) et dans le coulisseau (10), et **par le fait que** les dispositifs de blocage (17) sont prévus dans chaque barre support (8) dans la zone de leur trou oblong (13).

2. Support selon la revendication 1, **caractérisé par le fait que** les barres supports (8) s'étendent pour l'essentiel verticalement chacune dans la zone extérieure latérale de la paroi arrière (4) de la cabine ou bien de l'arête arrière du déflecteur de pavillon (18), sont articulées au niveau de leur extrémité supérieure sur chacun des supports de palier (19) disposé sur le déflecteur de pavillon (5) au niveau de son arête arrière (18) et sont placées au maximum à une telle distance l'une de l'autre qu'une personne de service se tenant debout derrière la paroi de la cabine sur le châssis du camion soit en mesure de manier simultanément le volant/la molette de réglage (14) des deux coulisseaux (10) pour régler le déflecteur de pavillon avec les deux mains sans changer de place.

3. Support selon la revendication 1, **caractérisé par le fait que**, pour le réglage du déflecteur de pavillon (5) dans une nouvelle position momentanée, la liaison de blocage entre chaque barre support (8) et son coulisseau (10) est tout d'abord relevable en desserrant le verrouillage au moyen du volant/de la molette de réglage (14), que le déflecteur de pavillon (5) et les barres supports (8) se déplaçant simultanément sont ensuite réglables par rapport aux coulisseaux (10) et peuvent être enclenchés à chaque fois grâce à un autre dispositif de blocage (17) comme auparavant de nouveau avec un dispositif de blocage (16) côté coulisse et la barre support (8) est finalement verrouillable de nouveau sur le coulisseau (10) de la barre support par le serrage du volant/de la molette de réglage (14).

4. Support selon une des revendications 1 à 3, **caractérisé par le fait que** les dispositifs de blocage (17) prévus dans chaque barre support (8) au niveau de leur trou oblong (13) se composent de trous de fixation (17') s'étendant sur toute la longueur de la plage de réglage, placés à distance égale les uns des autres, de même diamètre, adaptés à la forme et à la taille d'un élément de fixation (16') formant côté coulisseau le dispositif de blocage (17), ces trous de fixation (17') étant reliés les uns sous les autres par une fente (13') s'étendant le long d'une ligne droite et cette fente est dimensionnée de telle manière que la tige filetée du volant/de la molette de réglage (12) et que, le cas échéant, un des ressorts de pression (24) entourant celle-ci puisse, lors du réglage du déflecteur de pavillon (5) et ainsi lors du déplacement de la barre support (8), venir d'un trou de fixation (17') dans la plage d'un trou de fixation suivant de cette barre support après le desserrage du verrouillage au moyen du volant/de la molette de réglage (14) et après un remplacement complet de l'élément de fixation (16').

5. Support selon une des revendications mentionnées précédemment, **caractérisé par le fait que** chaque barre support (8) se compose d'une barre métallique droite avec une section en forme de U fabriquée soit par découpe d'une barre de demi-produit profilée en U ou par l'emboutissage d'une tôle et dans laquelle les dispositifs de blocage (17, 17') sont formée dans la paroi transversale (23) s'étendant entre les deux joues latérales (21, 22) parallèles l'une par rapport à l'autre.

6. Support selon la revendication 4, **caractérisé par le fait que** le coulisseau (10) est réalisé de préférence en une seule pièce coulée en métal ou en plastique et présente un corps de base (25) avec les caractéristiques de pièce suivantes :
- un alésage centrale de passage (26) avec un filetage (27) au minimum sur une section pour l'introduction ainsi que pour le vissage de la tige filetée (12) du volant/de la molette de réglage,
- un élément de fixation (16') préformé sur lui du côté de la zone avant et formant le dispositif de blocage (16), avec une surface de contact avant, et
- une surface d'appui (11) replacée axialement sur lui par rapport à la surface de contact avant (28) sur l'élément de fixation (16') et formée à son extrémité intérieure par une surface annulaire plate, surface d'appui sur laquelle la barre support (8) est soit verrouillable directement dessus ou bien un ensemble de ressorts diaphragmes (29) peut être en appui et la barre support peut se verrouiller dessus.

7. Support selon les revendications 5 et 6, **caractérisé par le fait que** le corps de base (25) du coulisseau (10) possède une telle forme extérieure et taille qu'il est guidé en travers horizontalement dans la barre support (8).

8. Support selon une des revendications 6 et 7, **caractérisé par le fait que** dans le cas où le coulisseau (10) est placé directement sur la cabine (1), celui-ci présente sur son côté opposé au volant/à la molette de réglage (14) deux joues de fixation (40, 41) disposées en dépassant sur le corps de base (25) et possédant des alésages transversaux (42, 43) fuyant, au-dessus desquels le coulisseau (10) est articulé de manière à pivoter autour d'un axe transversal horizontal sur un support de palier (47) disposé de manière fixe sur la cabine au moyen d'un axe de palier (44) ou de deux vis de palier (45, 46).

9. Support selon une des revendications 1 à 8, **caractérisé par le fait que** par la suite, lorsque une plaque de verrouillage (15) est prévue, cet élément du volant/de la molette de réglage (14) et à la manière d'un ressort diaphragme est disposé de manière fixe ou mobile et peut pivoter sur celui-ci/celle-ci.

10. Support selon une ou plusieurs revendications 1 à 8, **caractérisé par le fait que** par la suite, lorsqu'une plaque de verrouillage (15) est prévue, celle-ci chevauche la barre support (8) à l'extérieur au minimum partiellement de manière bloquable avec un tel jeu qu'elle peut être déplacée par glissement par le guidage comme une sorte de chariot le long de la barre support (8) lorsque le verrouillage est desserré, et qu'à cette plaque de verrouillage (15) est attribué(e) un volant/une molette de réglage (14) avec une gorge (49) avec une surface de pression (50) côté avant sur laquelle la plaque de verrouillage (15) est appuyée.

11. Support selon la revendication 10, **caractérisé par le fait que** la plaque de verrouillage (15) enveloppe la barre support (8) à l'extérieur de manière bloquable uniquement aussi loin qu'elle pourrait être soulevée de celle-ci, que cette plaque de verrouillage (15) présente un trou de passage (51) d'une telle taille et le trou oblong (13) ou la fente à trou oblong (13') dans la barre support (8) possède une telle largeur que la tige fileté du volant/de la molette de réglage (12) passe dedans exactement, et que dans ce cas le verrouillage a lieu par la plaque de verrouillage (15) mise en appui sur la face avant (28) du coulisseau (10) et par l'intermédiaire d'un ensemble de ressorts diaphragmes (29) qui s'appuie d'une part sur la surface d'appui (11) côté coulisseau et d'autre part à l'intérieur sur la barre support (8), et la barre support appuie de cette manière sur la plaque de verrouillage (15) et cette dernière sur la surface de pression (50) sur la gorge (49) du volant/de la molette de réglage (14).

12. Support selon la revendication 10, **caractérisé par le fait que** la plaque de verrouillage (15) enveloppe la barre support (8) à l'extérieur de manière bloquable aussi loin qu'elle ne puisse pas se séparer de cette dernière et reste toujours en contact par glissement, que cette plaque de verrouillage (15) présente un trou de passage (51) d'une telle taille que la tige filetée du volant/de la molette de réglage passe dedans exactement, que l'alésage de passage central (26) dans le coulisseau (10) présente par rapport à la section filetée (27) une section de diamètre plus important dans laquelle est logé un ressort de pression (24) entourant coaxialement la tige filetée du volant/de la molette de réglage (12), ce ressort de pression (24) étant appuyé à l'autre extrémité sur la face intérieure de la plaque de verrouillage (8), par le biais duquel, en desserrant le verrouillage par détente du ressort de pression (24), la plaque de verrouillage (15) peut être soulevée avec la barre support (8) du coulisseau (10), et que, dans ce cas, la largeur du trou oblong (13) ou de la fente du trou oblong (13') dans la barre support est légèrement plus importante que le diamètre du ressort de pression (24).

13. Support selon une des revendications 1 à 12; **caractérisé par le fait qu'**au moyen d'éléments à déformation, par exemple un ensemble de ressorts diaphragmes (29) appuyés sur la surface d'appui annulaire (11) du coulisseau (10) ou bien des éléments à déformation incorporés sur le coulisseau (10) dans des alésages à trou borgne (52) tels que des ressorts en spirale ou des tampons en caoutchouc qui s'appuient à l'autre extrémité du côté intérieur sur la barre support (8) et grâce auxquels le contact d'appui constant entre la barre support (8), la plaque de verrouillage (15) et le volant/la molette de réglage (14) est assuré.

14. Support selon une des revendications 6 et 7, **caractérisé par le fait que** la plaque de verrouillage (15) est formée en tant que support du coulisseau (10) à la manière d'une fente de guidage longue comparable, est en outre placée de manière pivotable autour d'un axe transversal horizontal à son extrémité inférieure sur un support de palier (47) fixe sur la cabine au moyen d'un axe de palier (44) traversant transversalement ou bien de deux vis de palier (45, 46) et, dans ce cas, constitue le moyen par lequel le coulisseau (10) est disposé de manière mobile par rapport à la cabine (1).

15. Support selon une des revendications 1 à 14, **caractérisé par le fait que** la tige filetée du volant/de la molette de réglage (12) est bloquée sur le coulisseau (10) par le biais d'une collerette (54) disposée à son extrémité libre ou bien d'un circlip (55) pour éviter un desserrage trop grand ou complet.
